# DEMANDE DE BREVET EUROPEEN

(11) **EP 2 057 901 A1**
(43) Date de publication de la demande: **13.05.2009**
(21) Numéro de dépôt: 08290304.8
(22) Date de dépôt: 31.03.2008
(51) Int. Cl.: A22B 5/20

(54) **Installation de fente des carcasses de porc ou analogue comporant un ou plusieurs robots**

(30) Priorité: 12.11.2007 FR 0707905
(71) Demandeur: Durand International, 07210 Baix (FR)
(72) Inventeur: Klein, Nicolas, 26270 Loriol sur Drome (FR)
(74) Mandataire: Gaillarde, Frédéric F. Ch.

(57) **Abrégé**

L'installation de fente de carcasses de porc ou analogue, comprend des moyens (1) support des carcasses ayant des organes (2) de suspension des carcasses, un outil de fente (4) porté par une tête de fente (5), déplacé dans un plan de fente, un dispositif d'appui dorsal (6) et un dispositif d'appui ventral (7), aptes à être déplacés dans le plan de fente et à assurer un positionnement relatif déterminé et fixe de la carcasse par rapport au plan de fente, des moyens support de la tête de fente (5), des moyens support du dispositif d'appui dorsal (6) et du dispositif d'appui ventral (7), des moyens moteurs de l'outil de fente (4), des moyens de déplacement de la tête de fente (5), des moyens de déplacement du dispositif d'appui dorsal (6) et du dispositif d'appui ventral (7), des moyens de commande, et au moins un robot (8, 9, 16), supportant au moins une partie des moyens support de la tête de fente (5), des moyens support du dispositif d'appui dorsal (6) et des moyens support du dispositif d'appui ventral (7), et constituant au moins pour partie les moyens de déplacement des moyens qu'il supporte : tête de fente (5), dispositif d'appui dorsal (6) et dispositif d'appui ventral (7).

## Description

L'invention est relative à une installation de fente des carcasses de porc ou analogue.

On connaît déjà différentes réalisations d'installations de fente de carcasses de porc. Dans certaines réalisations, l'installation comporte une lame de scie circulaire et dans d'autres des couteaux. Selon les conceptions, soit la carcasse est fixe soit elle est entraînée à déplacement par un convoyeur pendant l'opération de fente. Soit l'installation est située d'un seul côté du plan de déplacement des carcasses soit elle est située des deux côtés. Dans ce dernier cas, soit l'installation comporte deux ensembles fonctionnels structurellement distincts soit ils sont solidarisés entre eux.

Selon les cas, soit la carcasse est fendue totalement pour produire deux demi carcasses indépendantes soit elle n'est fendue que partiellement les deux parties obtenues par fente restant associées l'une à l'autre dans une partie non sciée située dans la région de l'échine (cette coupe est connue sous l'expression de « coupe américaine »), voire même au milieu du dos.

Une réalisation d'une installation de fente des carcasses de porc est décrite par exemple dans le document EP-A-1 125 502. Une telle installation comprend :
- des moyens support des carcasses, incluant des organes de suspension des carcasses,
- un bâti comprenant deux colonnes verticales situées de part et d'autre du plan vertical de déplacement des carcasses,
- une lame de scie, portée par une tête de scie, apte à être rendue opératoire et déplacée dans le plan vertical médian de la carcasse à scier,
- un dispositif d'appui dorsal et un dispositif d'appui ventral, opposés l'un à l'autre et situés substantiellement de part et d'autre du plan de déplacement des carcasses, aptes à être déplacés lors du sciage dans le plan de sciage et à assurer un positionnement relatif déterminé et fixe de la carcasse lors du sciage par rapport au plan de sciage,
- des moyens support de la tête de scie, à savoir un chariot porté par l'une des colonnes du bâti par l'intermédiaire d'autres chariots, la combinaison des chariots - et de leur mouvement
- permettant de positionner la lame de scie à tout emplacement souhaité,
- des moyens support du dispositif d'appui dorsal et des moyens support du dispositif d'appui ventral, à savoir des chariots, portés, le premier, par l'autre des colonnes du bâti, par l'intermédiaire d'autres chariots, et le second par le chariot support de la tête de scie,
- des moyens moteurs de la lame de scie pour la rendre opératoire,
- des moyens de déplacement de la tête de scie,
- des moyens de déplacement du dispositif d'appui dorsal et des moyens de déplacement du dispositif d'appui ventral, à savoir des moyens respectifs de coulissement combinés à des moyens respectifs d'entraînement,
- des moyens de commande des moyens moteurs de la lame de scie, des moyens de déplacement de la tête de scie, des moyens de déplacement du dispositif d'appui dorsal, des moyens de déplacement du dispositif d'appui ventral, selon des déplacements coordonnées pour assurer le sciage des carcasses successives dans leurs plans médians selon des cycles de sciage successifs.

Avec une telle installation, les moyens mécaniques sont nombreux, chacun d'eux assurant une fonction propre : support, coulissement (ou guidage), entraînement. L'installation est donc lourde et encombrante. Le remplacement de tel ou tel organe nécessite du temps. Enfin, son nettoyage est rendu complexe.

Le document US-A-4653150 décrit un appareil de fente de carcasses qui comprend
- des moyens support des carcasses, incluant des organes de suspension des carcasses,
- un bâti mobile comprenant deux colonnes verticales situées de part et d'autre du plan vertical de déplacement des carcasses,
- une lame de scie, portée par l'une des deux colonnes,
- et un dispositif d'appui dorsal, porté par l'autre des deux colonnes.

Le document EP-A-0801900 décrit un procédé et un dispositif de guidage dorsal pour la fente d'une carcasse d'animal de boucherie.

Les appareils ou installations qui viennent d'être décrits sont certes des systèmes automatiques mécanisés capables d'effectuer plusieurs tâches, dans un environnement donné, de manière autonome, par l'exécution d'un programme, Pour autant, ils ne peuvent être qualifiés de robots industriels au sens où on l'entend couramment dans les milieux industriels, comme il sera exposé par la suite.

Le document WO 2006/063744 décrit un procédé et un système de découpe de carcasses, comprenant un robot de coupe à poste fixe, auquel est associé une surface de support des carcasses et des moyens presseurs montés coulissant le long de cette surface support.
Ce procédé et ce système ne bénéficient pas des avantages qu'offrent la robotisation, celle-ci n'étant que très partielle.

Le document WO 2007/122244 décrit un procédé de découpe de carcasses mettant en oeuvre un robot porte scie. Comme précédemment, ce procédé ne bénéficie pas des avantages qu'offrent la robotisation, celle-ci n'étant que très partielle.

Le document EP-A-1 263 292 décrit un appareil de découpage de carcasses qui comprend une découpeuse supportée par un bras robotisé commandé par un ordinateur couplé à un système optique. Cet appareil n'est pas destiné à la fente des carcasses. En outre, il pose le problème que la carcasse traitée n'est pas maintenue individuellement et de façon précise mais seulement appuyée contre une paroi. Une disposition analogue est décrite dans les documents WO 2006/063744 et US-4 667 371.

Le document EP-A-0 494 935 décrit un procédé et un appareil pour séparer une matière de structure relativement faible d'une matière de structure relativement robuste en utilisant un organe de coupe commandé par un robot. Ce procédé et cet appareil ne permettent pas la fente de carcasses.

Les documents EP-A-1010499 et EP-A-1880809 décrivent, ce que l'on entend couramment dans les milieux industriels par « robot ». On entend par là non pas un quelconque système automatique mécanisé capable d'effectuer une ou plusieurs tâches, dans un environnement donné, de manière autonome, par l'exécution d'un programme, comme est parfois défini un robot, mais un dispositif industriel apte à réaliser une tâche opératoire en réponse à une instruction qui lui est donnée, comportant une base et, montée sur elle avec au moins un degré de rotation, une succession de bras terminée par une main, articulés les uns aux autres et auxquels sont associés des moyens d'entraînement, la main étant apte à être déplacée selon un parcours déterminé ou déterminable, à transmettre une force, et à être équipée d'un dispositif de travail dédié. C'est en référence à cette seconde définition que le mot « robot » est utilisé ici.

Il existe un besoin d'une installation de fente de carcasses qui soit moins lourde et encombrante que les installations connues, qui permette le remplacement de tel ou tel organe en un temps limité, dont le nettoyage est aisé et efficace, qui assure un maintien efficace des carcasses afin que la fente soit de qualité et sans déperdition, enfin qui puisse tirer un parti maximal des avantages qu'offre la robotisation, au sens où cela a été défini plus haut.

A cet effet, l'invention propose une installation de fente de carcasses C de porc ou analogue comprenant :
- des moyens support des carcasses C avant la fente, lors de la fente, et après la fente, comprenant des organes de suspension des carcasses C,
- un outil de fente des carcasses C, porté par une tête de fente, apte à être rendu opératoire et déplacé dans un plan de fente au moins sensiblement vertical et médian de la carcasse lors de la fente, disposé au moins sensiblement perpendiculairement à un plan au moins sensiblement vertical de déplacement relatif en translation des carcasses C au moins avant et après la fente passant par l'organe de suspension de la carcasse lors de la fente, le plan de déplacement des carcasses C et l'organe de suspension des carcasses C définissant une ligne de déplacement des carcasses C au moins sensiblement horizontale,
- un dispositif d'appui dorsal et un dispositif d'appui ventral, opposés l'un à l'autre et situés substantiellement de part et d'autre du plan de déplacement des carcasses C, aptes à être déplacés lors de la fente dans le plan de fente et à assurer un positionnement relatif déterminé et fixe de la carcasse lors de la fente par rapport au plan de fente,
- des moyens support de la tête de fente,
- des moyens support du dispositif d'appui dorsal et des moyens support du dispositif d'appui ventral,
- des moyens moteurs de l'outil de fente pour le rendre opératoire dans le plan de fente,
- des moyens de déplacement de la tête de fente,
- des moyens de déplacement du dispositif d'appui dorsal et des moyens de déplacement du dispositif d'appui ventral,
- des moyens de commande des moyens moteurs de l'outil de fente, des moyens de déplacement de la tête de fente, des moyens de déplacement du dispositif d'appui dorsal, des moyens de déplacement du dispositif d'appui ventral, de façon coordonnée pour assurer la fente des carcasses C successives dans leurs plans médians respectifs, selon des cycles de fente successifs,
caractérisée par au moins un robot, à savoir un dispositif industriel apte à réaliser une tâche opératoire en réponse à une instruction qui lui est donnée, comportant une base et, montée sur elle avec au moins un degré de rotation, une succession de bras terminée par une main, articulés les uns aux autres et auxquels sont associés des moyens d'entraînement, la main étant apte à être déplacée selon un parcours déterminé ou déterminable, à transmettre une force, et à être équipée d'un dispositif de travail dédié:
- supportant au moins une partie des moyens support de la tête de fente, des moyens support du dispositif d'appui dorsal et des moyens support du dispositif d'appui ventral,
- et constituant au moins pour partie les moyens de déplacement des moyens qu'il supporte : tête de fente, dispositif d'appui dorsal et dispositif d'appui ventral.

Selon une réalisation, les moyens support de la tête de fente, les moyens support du dispositif d'appui dorsal et les moyens support du dispositif d'appui ventral sont tous portés par au moins un robot constituant les moyens de déplacement de la tête de fente, du dispositif d'appui dorsal et du dispositif d'appui ventral.

Selon une caractéristique de l'invention, l'installation est dépourvue de colonne formant bâti, de chariot porté par une telle colonnes et d'organe de guidage et d'entraînement associé à un tels chariot, tels que ceux connus de l'état de la technique.

Selon une première réalisation, l'installation comporte deux robots, à savoir :
- un premier robot supportant les moyens support de la tête de fente et les moyens support du dispositif d'appui ventral, et constituant par ailleurs les moyens de déplacement de la tête de fente et du dispositif d'appui ventral,
- un second robot supportant les moyens support du dispositif d'appui dorsal, et constituant par ailleurs les moyens de déplacement du dispositif d'appui dorsal
- les deux robots étant situés en regard l'un de l'autre, de part et d'autre du plan de déplacement des carcasses C, et séparés par un espace libre permettant le passage entre eux des carcasses C.

Selon une seconde réalisation, l'installation comporte un robot unique supportant à la fois les moyens support de la tête de fente, les moyens support du dispositif d'appui dorsal et les moyens support du dispositif d'appui ventral, ce robot constituant pat ailleurs les moyens de déplacement de la tête de fente, du dispositif d'appui dorsal et du dispositif d'appui ventral, ce robot étant décalé latéralement par rapport au plan de déplacement des carcasses C pour permettre le passage des carcasses C.

Selon une réalisation, un robot est de type six axes.

Selon un autre premier mode de réalisation, il est prévu en premier lieu un ou des robots à poste fixe dont une partie substantielle au moins des déplacements intervient au moins sensiblement dans le plan de fente formant au moins sensiblement un plan médian du ou des robots, et en second lieu des moyens de commande aptes à commander les organes de suspension des carcasses C pour que, lors de la fente, ils restent à l'état stationnaire.

Selon un autre second mode de réalisation, il est prévu en premier lieu un ou des robots à poste fixe dont une partie des déplacements intervient au moins sensiblement dans le plan de fente et une partie des déplacements intervient en dehors du plan de fente, et en second lieu des moyens de commande aptes à commander le ou les robots et les organes de suspension des carcasses C pour que, lors de la fente, ces derniers soient déplacés en translation le long de la ligne de déplacement et dans le plan de déplacement des carcasses C, en synchronisme avec le ou les robots afin que la tête de fente et la carcasse se trouvent dans le plan de fente.

Selon un troisième mode de réalisation, il est prévu un ou des robots portés par une ou des tables montées à coulissement au moins sensiblement horizontalement au moins sensiblement parallèlement à la ligne de déplacement des carcasses C, ainsi que des moyens de déplacement des organes de suspension des carcasses C le long de la ligne de déplacement des carcasses C et dans le plan de déplacement des carcasses C, les moyens de commande étant aptes à commander en synchronisme les organes de suspension des carcasses C et la ou les tables pour qu'ils restent en regard, sans décalage substantiel parallèlement à la ligne de déplacement des carcasses C, au moins lors la fente.

Selon une réalisation, l'installation comprend également un ou des dispositifs de nettoyage, tels que des caissons, dans lesquels le ou les robots peuvent introduire les moyens qu'ils supportent en vue de leur nettoyage.

Selon une réalisation, un robot est pourvu de moyens de protection contre les salissures, déformables, tels qu'une gaine, une housse ou analogue.

Selon une réalisation, l'installation comporte un dispositif d'appui dorsal et/ou un dispositif d'appui ventral disposés au moins sensiblement au voisinage du plan de fente et comportant une pluralité d'organes de guidage, tels que des galets, écartés l'un de l'autre au moins sensiblement parallèlement à la ligne de déplacement des carcasses C, et situés de part et d'autre du plan de fente, à proximité, notamment immédiate, de l'outil de fente.

Selon une réalisation, pour le dispositif d'appui dorsal et/ou pour le dispositif d'appui ventral, les organes de guidage sont agencés en une paire d'organes écartés par un espacement faible l'un de l'autre, le long d'une direction au moins sensiblement verticale.

Selon un autre premier mode de réalisation, un robot porte la tête de fente qui elle-même porte le dispositif d'appui ventral situé en dessous.

Selon un autre second mode de réalisation, un robot porte distinctement la tête de fente et le dispositif d'appui ventral, situé en dessous de la tête de fente.

Selon une réalisation, il est prévu des moyens de déplacement relatifs à translation sur une faible course de la tête de fente et du dispositif d'appui ventral par rapport à une ligne au moins sensiblement horizontale située dans le plan de fente, les moyens de commande agissant également sur ces moyens de déplacement.

Selon une réalisation, il est prévu des moyens de protection mobiles ou amovibles de l'outil de fente aptes à ce que sa partie pouvant interférer avec les jambons de la carcasses C soit en premier lieu rendue inopérante au plus tard avant que l'outil de fente n'interfère avec la carcasse et, en second lieu, rendue opérante pour la fente de la carcasse C proprement dite. Selon deux modes de réalisation possibles, les moyens de commande des moyens moteurs de l'outil de fente, des moyens de déplacement de la tête de fente, des moyens de déplacement du dispositif d'appui dorsal, des moyens de déplacement du dispositif d'appui ventral, sont programmés pour assurer soit la fente totale soit la fente ou partielle des carcasses C successives dans leurs plans médians respectifs.

Selon les réalisations, l'outil de fente est du type lame de scie circulaire montée à pivotement autour de son axe ou du type un ou un ensemble de couteaux montés à pivotement alternativement sur une certaine course.

L'invention sera bien comprise à la lecture de la description qui suivra de plusieurs exécutions et réalisations, en référence aux figures suivantes :
- La figure 1 est une vue schématique en perspective, du côté ventral de la carcasse, d'une première réalisation possible de l'installation dans le cas où elle comporte deux robots à poste fixe, l'outil de fente, le dispositif d'appui ventral et le dispositif d'appui dorsal étant en situation permettant de commencer une fente d'un carcasse à fendre se trouvant dans l'installation,
- La figure 2 est une vue schématique analogue à la figure 1, d'une deuxième réalisation possible de l'installation dans le cas où elle comporte deux robots portés par une table montée à coulissement horizontal parallèlement aux moyens support des carcasses C,
- La figure 3 est une vue schématique analogue aux figures 1 et 2, d'une troisième réalisation possible de l'installation dans le cas où elle comporte un robot à poste fixe,
- La figure 4 est une vue schématique analogue aux figures 1 à 3 d'une quatrième réalisation possible de l'installation dans le cas où elle comporte un robot porté par une table montée à coulissement horizontal parallèlement aux moyens support des carcasses C.

La description est faite en référence à une installation « en situation », c'est-à-dire apte à fonctionner. C'est ainsi que doivent être compris les mots « vertical », « horizontal », « haut », « bas ». Il doit également être compris que « vertical », comme « horizontal » vise à la fois ce qui est strictement vertical ou horizontal, respectivement, et ce qui l'est sensiblement, même si ce qualificatif n'est pas mentionné.

Dans la description, le mot « robot » désigne un dispositif industriel apte à réaliser une tâche opératoire en réponse à une instruction qui lui est donnée, comportant une base et, montée sur elle avec au moins un degré de rotation, une succession de bras terminée par une main, articulés les uns aux autres et auxquels sont associés des moyens d'entraînement, la main étant apte à être déplacée selon un parcours déterminé ou déterminable, à transmettre une force, et à être équipée d'un dispositif de travail dédié.

Une telle installation de fente d'une carcasse C de porc comporte tout d'abord des moyens 1 support des carcasses C avant la fente, lors de la fente, et après la fente - totale ou partielle selon les réalisations. On entend par « lors de la fente », la phase qui comporte la fente proprement dite, mais aussi la phase préparatoire à la fente proprement dite et la phase consécutive à la fente.

Les moyens 1 support des carcasses comprennent des organes 2 de suspension des carcasses C, de manière que celles-ci, soient disposées verticalement pattes arrières en haut et tête en bas. Ces moyens 1 sont placés en haut de l'installation, au-dessus des carcasses C.

Dans une réalisation, les moyens support des carcasses 1, comprennent également des moyens de déplacement des organes 2 - et donc d'entraînement des carcasses C - dans un plan de déplacement vertical, le long d'une ligne de déplacement disposée horizontalement.

Si l'invention s'applique tout spécialement aux carcasses C de porc, elle peut être transposée aux carcasses C d'animaux équivalents. On entend par là des animaux dont la fente est réalisée de manière analogue à celle utilisée pour les porcs. Par exemple, il peut s'agir de veaux.

Le mot « frontal » se réfère à ce qui est proche ou tourné vers le plan de déplacement des carcasses C. Le mot « arrière » se réfère à ce qui est, au contraire, éloigné ou tourné à l'opposé du plan de déplacement des carcasses C. Le mot « transversal » se réfère à ce qui est disposé perpendiculairement ou sensiblement perpendiculairement au plan de déplacement des carcasses C.

Enfin, les mots « dorsal » et « ventral » doivent être compris en relation avec une carcasse C.

Les moyens 1 support des carcasses sont par exemple un convoyeur tel qu'un rail 3 supporté par une superstructure, s'étendant le long de la ligne de déplacement, auquel sont suspendus à intervalles réguliers des organes 2 de suspension tels que des tinets à deux branches ou des moyens équivalents, destinés à l'accrochage des carcasses C par les pattes arrière, tête en bas. On définit ainsi une ligne de déplacement D des carcasses C. Les moyens d'entraînement des organes 2 de suspension sont par exemple une chaîne sans fin à laquelle sont accrochés les organes 2 de suspension, cette chaîne étant entraînée par un moteur ou un moto-réducteur.

L'installation comporte un outil 4 de fente des carcasses C, porté par une tête de fente 5.

L'outil de fente 4 est, dans les réalisations représentées sur les figures, une lame de scie circulaire montée à pivotement autour de son axe disposé parallèlement à la ligne de déplacement D. L'outil de fente 4 peut être, alternativement, un ou un ensemble de couteaux montés à pivotement alternativement sur une certaine course.

L'outil de fente 4 est apte à être rendu opératoire dans le plan vertical médian de la carcasse C, dénommé plan de fente. On entend par « opératoire » le fait que l'outil de fente 4 est en mesure d'assurer sa fonction de fente de la carcasse C. Des moyens moteurs sont prévus à cet effet, tel qu'un moteur électrique ou un moto-réducteur incorporé à la tête de fente 5, qui permet l'entraînement de l'outil de fente 4 à rotation dans le cas d'une lame de scie ou alternativement dans un sens et dans l'autre sur une certaine course de pivotement dans le cas de couteaux.

Le plan de fente est disposé verticalement, transversalement. Selon que, lors de la fente, la carcasse C reste à l'état stationnaire ou au contraire est déplacée en translation le long de la ligne de déplacement D et dans le plan de déplacement, le plan de fente est fixe ou au contraire est déplacé en translation parallèlement à lui-même et à la ligne de déplacement D des carcasses C.

L'outil de fente 4 est apte, également, à être déplacé - dans son ensemble - dans le plan de fente. Pour ce faire, la tête de fente 5 est déplacée, son déplacement assurant celui de l'outil de fente 4.

Dans une réalisation, il est prévu des moyens mécaniques de protection mobiles ou amovibles de l'outil de fente 4. De tels moyens de protection sont aptes à ce que la partie de l'outil de fente 4 pouvant interférer avec les jambons de la carcasse C soit d'abord rendue inopérante au plus tard avant que l'outil de fente 4 n'interfère avec la carcasse C et, ensuite, rendue opérante pour la fente de la carcasse C proprement dite. Une telle disposition constructive permet de préserver l'intégrité des jambons, partie noble de la carcasse C.

L'installation comporte également un dispositif d'appui dorsal 6 et un dispositif d'appui ventral 7 sur la carcasse C. Ces dispositifs 6, 7, ont pour fonction d'exercer sur la carcasse C des forces propres à assurer un positionnement relatif correct, déterminé et fixe de la carcasse à fendre C par rapport au plan de fente, lors de la fente. Dans une réalisation, de tels dispositifs d'appui dorsal et d'appui ventral sont du type général décrit dans le document EP-A- 1 15 502, à la portée de l'homme du métier.

Les dispositifs 6, 7 sont disposés dans ou au voisinage du plan de fente, en étant opposés l'un à l'autre vers le plan de déplacement des carcasses C, et situés substantiellement de part et d'autre de ce plan. Les dispositifs 6, 7 sont aptes à être déplacés lors de la fente dans le plan de fente, pour assurer leur fonction de positionnement de la carcasse C lors de la fente. Leur déplacement est adapté au type de fente à réaliser : fente totale ou fente partielle.

Dans une réalisation, le dispositif d'appui dorsal 6 est situé du coté opposé à la tête de fente 5 et à l'outil de fente 4. Dans cette même réalisation, le dispositif d'appui ventral 7 est situé du même coté que la tête de fente 5 et l'outil de fente 4. La notion de « même côté » ou de « coté opposé » s'entend par rapport au plan de déplacement des carcasses C.

Dans une réalisation, les dispositifs 6, 7 comportent une pluralité d'organes de guidage tels que des galets montés à rotation, ou des guide fixes, destinés à venir contre la carcasse C, respectivement contre lesquels vient la carcasse C, avec une certaine pression.

Ces organes de guidage viennent contre la carcasse de part et d'autre du plan de fente et, comme indiqué, de part et d'autre du plan de déplacement des carcasses C. A cet effet, dans la réalisation considérée ici, tant pour le dispositif 6 que pour le dispositif 7, les organes de guidage sont agencés en une paire d'organes écartés légèrement l'un de l'autre parallèlement à la ligne de déplacement des carcasses C, et situés à proximité, notamment immédiate, de l'outil de fente 4, de part et d'autre de celui-ci. Cette disposition constructive est telle que les organes de guidage tendent à exercer sur la carcasse C des forces dirigées vers le plan de fente.

En outre, dans la réalisation considérée ici, et le cas échéant tant pour le dispositif 6 que pour le dispositif 7, les organes de guidage sont agencés également en une paire d'organes écartés l'un de l'autre le long d'une direction verticale par un espacement faible. Cette disposition constructive permet aux organes de guidage d'épouser la forme de la carcasse C au fur et à mesure de la fente.

Avec les dispositions qui viennent d'être décrites, chaque dispositif 6, 7 comporte quatre galets ou guides. Le cas échéant, il peut être prévus d'autres réalisations avec un nombre de galets ou de guides différents.

Les dispositifs 6, 7 sont aptes à être déplacés, dans leur ensemble, dans le plan de fente, lors de la fente, en restant à proximité de l'outil de fente 4. Lorsqu'il est souhaité que l'outil de fente 4 cesse de fendre la carcasse C, comme tel est le cas pour la coupe dite américaine, les dispositifs 6, 7 sont écartés de l'outil de fente 4, respectivement de la carcasse C.

Plus généralement, le moment où d'une part le dispositif 6, d'autre part le dispositif 7 commence à interférer avec la carcasse C, et le moment où il cesse d'interférer avec la carcasse C, par rapport au moment où l'outil de fente 4 commence et cesse d'interférer avec la carcasse C, respectivement, peut faire l'objet de variantes de réalisations, en fonction des caractéristiques de fente souhaitée.

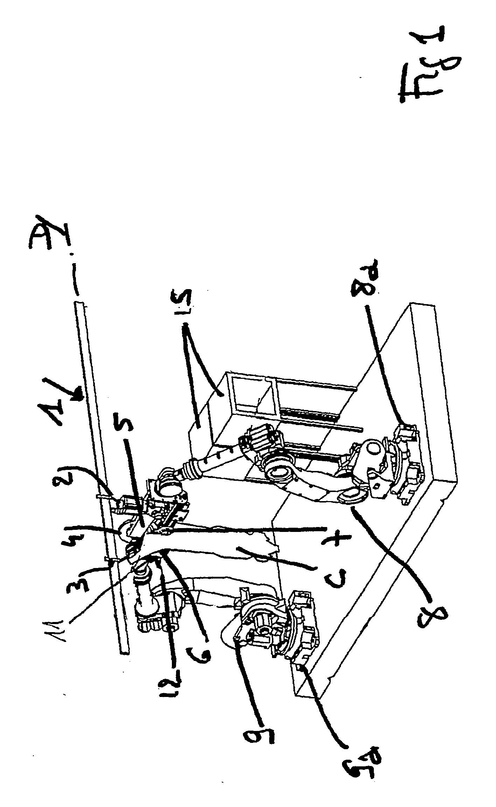

Dans la première réalisation (figure 1), l'installation comporte un premier robot ou bras manipulateur 8 et un second robot ou bras manipulateur 9 (par la suite, on utilisera par commodité le seul terme de « robot »).

Ces robots 8, 9 sont situés vers le bas de l'installation et sont à poste fixe, étant fixés au sol S ou sur toute superstructure appropriée équivalente, par leurs embases arrières et inférieures 8a, 9a.

Les deux robots 8, 9 sont placés de part et d'autre du plan de déplacement des carcasses C et des moyens 1 support des carcasses C. Ils sont situés dans un même plan transversal. Ils sont écartés l'un de l'autre d'une distance permettant le passage entre eux des carcasses C.

Dans une réalisation, les robots 8, 9 sont de type ayant six axes AA, BB, CC, DD, EE et FF. De plus, ces robots sont du type apte à manipuler de fortes charges.

Le premier robot 8 supporte - et pour partie constitue - les moyens 10 support de la tête de fente 5 et les moyens 11 support du dispositif d'appui ventral 7, placés à l'extrémité frontale du premier robot 8, au voisinage l'un de l'autre.

Selon une réalisation, le premier robot 8 porte les moyens 10 support de la tête de fente 5 qui elle-même porte les moyens 11 support du dispositif d'appui ventral 7, situé en dessous de la tête de fente 5, notamment juste en dessous.

Dans une autre réalisation, le premier robot 8 qui porte distinctement, séparément, les moyens 10 support de la tête de fente 5 et les moyens 11 support du dispositif d'appui ventral 7, situé comme indiqué précédemment.

Dans une réalisation compatible avec l'une et l'autre de celles qui viennent d'être décrites, il est prévu des moyens de déplacement relatif à translation sur une faible course de la tête de fente 5 et du dispositif d'appui ventral 7 par rapport à une ligne horizontale transversale située dans le plan de fente. Dans ce cas, les moyens de commande de l'installation sont prévus pour agir également sur ces moyens de déplacement. Cet arrangement est utile pour adapter la force exercée par le dispositif d'appui ventral sur la carcasse C en fonction des nécessitées liées à la fente.

D'autre part, le premier robot 8 constitue les moyens de déplacement dans le plan de fente de la tête de fente 5, ainsi que du dispositif d'appui ventral 7.

Le second robot 9 supporte - et pour partie constitue - les moyens 12 support du dispositif d'appui dorsal 6.

En outre, le second robot 9 constitue les moyens de déplacement du dispositif d'appui dorsal 6.

On entend par « le premier robot 8 supporte - et pour partie constitue - les moyens 10 support de la tête de fente 5 et les moyens 11 support du dispositif d'appui ventral 7 », et « le second robot 9 supporte - et pour partie constitue - les moyens 12 support du dispositif d'appui dorsal 6 », le fait que la structure même du robot 8, 9 porte la tête de fente 5, le dispositif d'appui ventral 7 ou le dispositif d'appui dorsal 6, de sorte que l'installation est dépourvue de colonne formant bâti, de chariot porté par une telle colonne et d'organe de guidage et d'entraînement associé à un tel chariot, comme dans l'état de la technique illustré par le document EP-A-1 125 502.

Les robots 8, 9 sont pourvus frontalement d'organes de fixation des moyens qu'ils supportent. Il peut s'agir de platines de fixation avec lesquels coopèrent des organes d'immobilisation appropriés. En outre, les robots 8, 9 sont choisis et configurés pour que les moyens qu'ils supportent puissent être localisés la où cela est nécessaire, avec les courses de mouvement indispensables.

L'installation comporte également des moyens de commande des moyens moteurs de l'outil de fente 4, des moyens de déplacement de la tête de fente 5, des moyens de déplacement du dispositif d'appui dorsal 6, des moyens de déplacement du dispositif d'appui ventral 7, et le cas échéant des moyens de déplacement des organes 2 de suspension des carcasses C comme exposé ci-après, selon des déplacements coordonnées pour assurer la fente totale ou partielle des carcasses C successives, dans leurs plans médians, selon des cycles de fente successifs.

Dans une première réalisation, une partie substantielle au moins des déplacements des robots 8, 9, intervient dans le plan de fente, lequel forme au moins sensiblement un plan médian des robots. Dans ce cas, il est prévu que les moyens de commande de l'installation sont aptes à commander les organes 2 de suspension des carcasses C pour que, lors de la fente, ils restent à l'état stationnaire.

Dans une seconde réalisation, une partie des déplacements des robots 8, 9, intervient dans le plan de fente et une partie en dehors de celui-ci. Dans ce cas, les moyens de commande sont agencés pour être aptes à commander les organes 2 de suspension des carcasses C pour que, lors de la fente, ils soient déplacés en translation le long de la ligne de déplacement et dans le plan de déplacement des carcasses C.

Dans une réalisation, l'installation comprend également un ou des dispositifs de nettoyage 15, tels que des caissons, dans lesquels les robots 8, 9 peuvent introduire les moyens qu'ils supportent en vue de leur nettoyage : outil de coupe 4, organes de guidage des dispositifs d'appui dorsal 6 et ventral 7. Un tel nettoyage intervient après une fente ou une série de fentes ou à tout moment souhaité.

Dans une réalisation, les robots 8, 9 sont pourvus de moyens de protection contre les salissures, ces moyens étant déformables en fonction de la déformation des robots 8,9, tels qu'une gaine, une housse ou analogue.

Les moyens de commande sont programmés pour assurer soit la fente totale soit la fente ou partielle des carcasses C successives dans leurs plans médians respectifs.

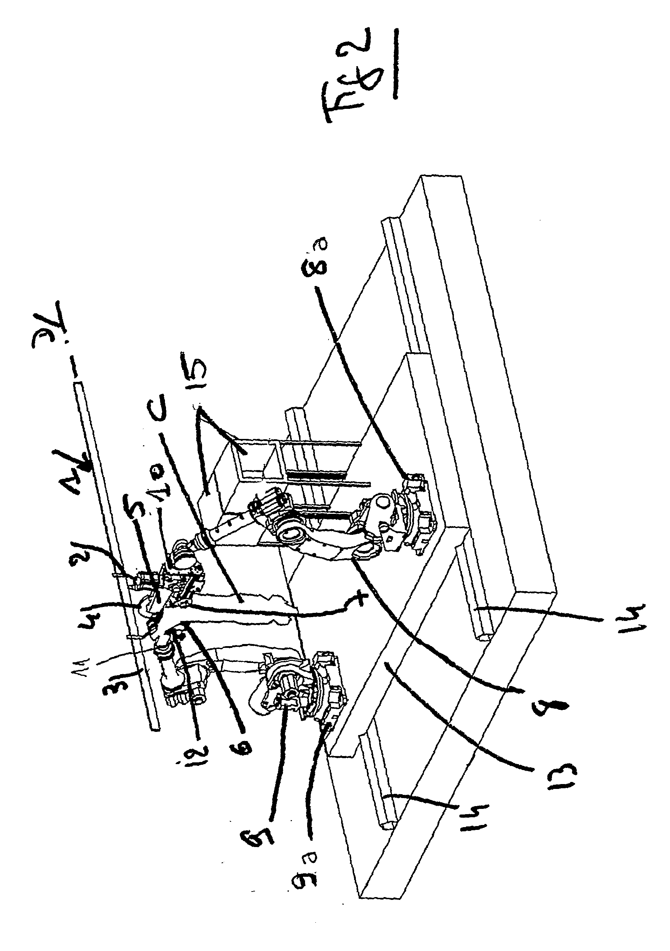

La deuxième réalisation (figure 2) se différencie de la première en ce que les robots 8, 9 ne sont pas fixés au sol S, mais portés par une table 13 montée à coulissement horizontal parallèlement aux moyens 1 support des carcasses C et à la ligne de déplacement grâce à des rails 14 ou équivalents fixés au sol S. Le cas échéant, il est prévu non pas une seule table, mais deux tables distinctes, une pour chaque robot 8, 9.

Dans ce cas, les moyens de commande sont aptes à commander en synchronisme les organes 2 de suspension des carcasses C et la ou les tables 13 pour qu'ils restent en regard, sans décalage substantiel parallèlement à la ligne de déplacement des carcasses C, au moins lors la fente.

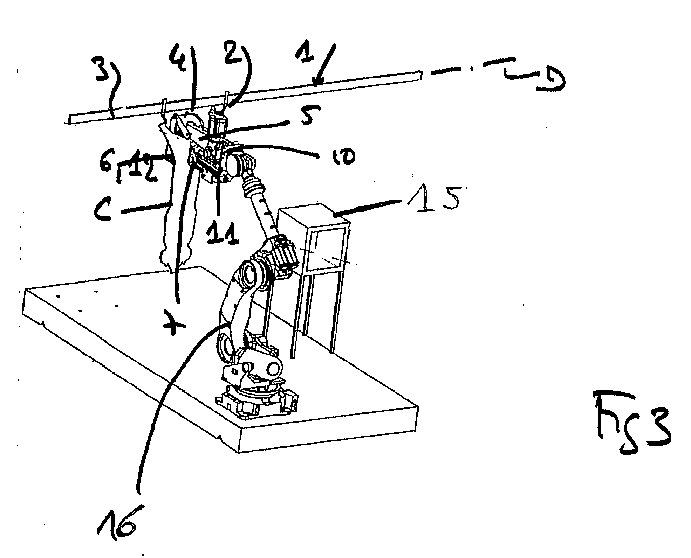

La troisième réalisation (figure 3) se différencie de la première en ce qu'il est prévu un seul et unique robot 16 et non deux robots tels que les robots 8, 9, le robot 16 assurant les fonctions remplies par les deux robots 8,9.

Dans ce cas, ce robot 16 est décalé latéralement par rapport au plan de déplacement des carcasses C, pour permettre le passage des carcasses. Le robot 16 est situé d'un même côté du plan de déplacement des carcasses C. Préférentiellement, il s'agit du côté ventral.

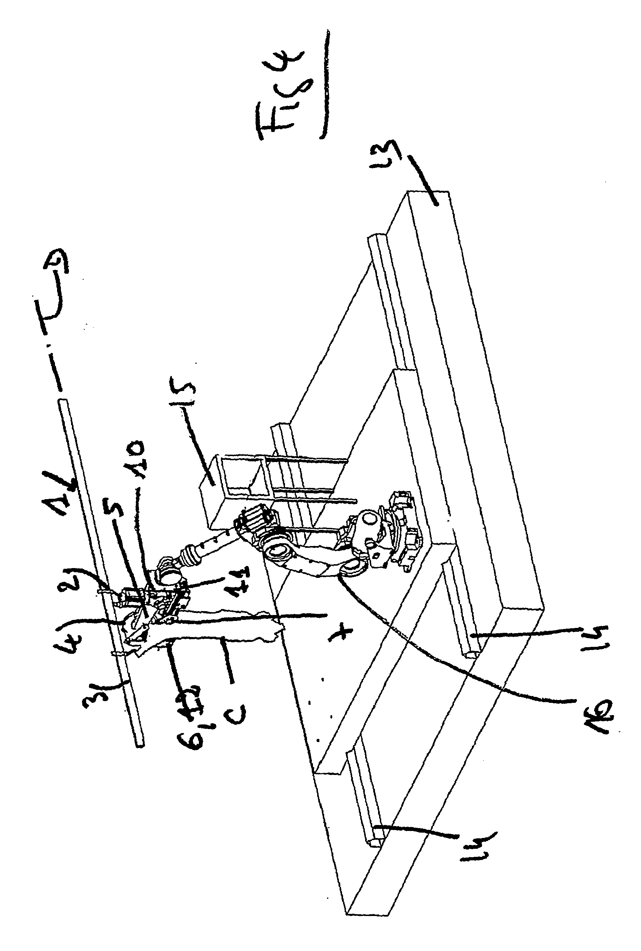

La quatrième réalisation (figure 4) se différencie de la troisième en ce que le robot 16 n'est pas fixé au sol S, mais porté par une table 13 montée à coulissement horizontal parallèlement aux moyens 1 support des carcasses C et à la ligne de déplacement grâce à des rails 14 ou équivalents fixés au sol S, comme dans la deuxième réalisation.

Le cas échéant, l'installation comporte des moyens de détection de la présence et de la proximité d'une carcasse C à fendre.

## Revendications

1. Installation de fente de carcasses C de porc ou analogue, comprenant
- des moyens (1) support des carcasses C avant la fente, lors de la fente, et après la fente, comprenant des organes (2) de suspension des carcasses C,
- un outil de fente (4) des carcasses C, porté par une tête de fente (5), apte à être rendu opératoire et déplacé dans un plan de fente au moins sensiblement vertical et médian de la carcasse C lors de la fente, disposé au moins sensiblement perpendiculairement à un plan au moins sensiblement vertical de déplacement relatif en translation des carcasses C au moins avant et après la fente passant par l'organe (2) de suspension de la carcasse C lors de la fente, le plan de déplacement des carcasses C et l'organe (2) de suspension des carcasses C définissant une ligne de déplacement des carcasses C au moins sensiblement horizontale,
- un dispositif d'appui dorsal (6) et un dispositif d'appui ventral (7), opposés l'un à l'autre et situés substantiellement de part et d'autre du plan de déplacement des carcasses C, aptes à être déplacés lors de la fente dans le plan de fente et à assurer un positionnement relatif déterminé et fixe de la carcasse C lors de la fente par rapport au plan de fente,
- des moyens support de la tête de fente (5),
- des moyens support du dispositif d'appui dorsal (6) et des moyens support du dispositif d'appui ventral (7),
- des moyens moteurs de l'outil de fente (4) pour le rendre opératoire dans le plan de fente,
- des moyens de déplacement de la tête de fente (5),
- des moyens de déplacement du dispositif d'appui dorsal (6) et des moyens de déplacement du dispositif d'appui ventral (7),
- des moyens de commande des moyens moteurs de l'outil de fente (4), des moyens de déplacement de la tête de fente (5), des moyens de déplacement du dispositif d'appui dorsal (6), des moyens de déplacement du dispositif d'appui ventral (7), de façon coordonnée pour assurer la fente des carcasses C successives dans leurs plans médians respectifs, selon des cycles de fente successifs,
**caractérisée par** au moins un robot (8, 9, 16), à savoir un dispositif industriel apte à réaliser une tâche opératoire en réponse à une instruction qui lui est donnée, comportant une base et, montée sur elle avec au moins un degré de rotation, une succession de bras terminée par une main, articulés les uns aux autres et auxquels sont associés des moyens d'entraînement, la main étant apte à être déplacée selon un parcours déterminé ou déterminable, à transmettre une force, et à être équipée d'un dispositif de travail dédié :
- supportant au moins une partie des moyens support de la tête de fente (5), des moyens support du dispositif d'appui dorsal (6) et des moyens support du dispositif d'appui ventral (7),
- et constituant au moins pour partie les moyens de déplacement des moyens qu'il supporte : tête de fente (5), dispositif d'appui dorsal (6) et dispositif d'appui ventral (7).

2. Installation selon la revendication 1, **caractérisée par le fait que** les moyens support de la tête de fente (5), les moyens support du dispositif d'appui dorsal (6) et les moyens support du dispositif d'appui ventral (7) sont tous portés par au moins un robot (8, 9, 16) constituant les moyens de déplacement de la tête de fente (5), du dispositif d'appui dorsal (6) et du dispositif d'appui ventral (7).

3. Installation selon l'une quelconque des revendications 1 et 2, **caractérisée par le fait que** l'installation est dépourvue de colonne formant bâti, de chariot porté par une telle colonne et d'organe de guidage et d'entraînement associé à un tel chariot.

4. Installation selon l'une quelconque des revendications 1 à 3, **caractérisée par** deux robots (8, 9), à savoir :
- un premier robot (8) supportant les moyens support de la tête de fente (5) et les moyens support du dispositif d'appui ventral (6), et constituant par ailleurs les moyens de déplacement de la tête de fente (5) et du dispositif d'appui ventral (6),
- un second robot (9) supportant les moyens support du dispositif d'appui dorsal (7), et constituant par ailleurs les moyens de déplacement du dispositif d'appui dorsal (7),
- les deux robots (8, 9) étant situés en regard l'un de l'autre, de part et d'autre du plan de déplacement des carcasses C, et séparés par un espace libre permettant le passage entre eux des carcasses C.

5. Installation selon l'une quelconque des revendications 1 à 3, **caractérisée par** un robot unique (16) supportant à la fois les moyens support de la tête de fente (5), les moyens support du dispositif d'appui dorsal (6) et les moyens support du dispositif d'appui ventral (7), ce robot (16) constituant par ailleurs les moyens de déplacement de la tête de fente (5), du dispositif d'appui dorsal (6) et du dispositif d'appui ventral (7), ce robot (16) étant décalé latéralement par rapport au plan de déplacement des carcasses C pour permettre le passage des carcasses C.

6. Installation selon l'une quelconque des revendications 1 à 5, **caractérisée par** un robot de type six axes.

7. Installation selon l'une quelconque des revendications 1 à 6, **caractérisée en** premier lieu par un ou des robots (8, 9, 16) à poste fixe dont une partie substantielle au moins des déplacements intervient au moins sensiblement dans le plan de fente formant au moins sensiblement un plan médian du ou des robots (8, 9, 16), et en second lieu par des moyens de commande aptes à commander les organes de suspension des carcasses C pour que, lors de la fente, ils restent à l'état stationnaire.

8. Installation selon l'une quelconque des revendications 1 à 6, **caractérisée en** premier lieu par un ou des robots (8, 9, 16) à poste fixe dont une partie des déplacements intervient au moins sensiblement dans le plan de fente et une partie en dehors de celui-ci, et en second lieu par des moyens de commande aptes à commander le ou les robots et les organes de suspension des carcasses C pour que, lors de la fente, ces derniers soient déplacés en translation le long de la ligne de déplacement et dans le plan de déplacement des carcasses C, en synchronisme avec le ou les robots afin que la tête de fente et la carcasse se trouvent dans le plan de fente.

9. Installation selon l'une quelconque des revendications 1 à 6, **caractérisée par** un ou des robots (8, 9, 16) portés par une ou des tables (13) montées à coulissement au moins sensiblement horizontalement au moins sensiblement parallèlement à la ligne de déplacement des carcasses C, des moyens de déplacement des organes (2) de suspension des carcasses C le long de la ligne de déplacement des carcasses C et dans le plan de déplacement des carcasses C, les moyens de commande étant aptes à commander en synchronisme les organes de suspension des carcasses C et la ou les tables pour qu'ils restent en regard, sans décalage substantiel parallèlement à la ligne de déplacement des carcasses C, au moins lors la fente.

10. Installation selon l'une quelconque des revendications 1 à 9, **caractérisée par le fait qu'**elle comprend également un ou des dispositifs de nettoyage (15), tels que des caissons, dans lesquels le ou les robots (8, 9, 16) peuvent introduire les moyens qu'ils supportent en vue de leur nettoyage.

11. Installation selon l'une quelconque des revendications 1 à 10, **caractérisée par le fait qu'**un robot (8, 9, 16) est pourvu de moyens de protection contre les salissures, déformables, tels qu'une gaine, une housse ou analogue.

12. Installation selon l'une quelconque des revendications 1 à 11, **caractérisée par** un dispositif d'appui dorsal (6) et/ou un dispositif d'appui ventral (7) disposés au moins sensiblement au voisinage du plan de fente et comportant une pluralité d'organes de guidage, tels que des galets, écartés l'un de l'autre au moins sensiblement parallèlement à la ligne de déplacement des carcasses C, et situés de part et d'autre du plan de fente, à proximité, notamment immédiate, de l'outil de fente (4).

13. Installation selon l'une quelconque des revendications 1 à 12, **caractérisée en ce que** pour le dispositif d'appui dorsal (6) et/ou pour le dispositif d'appui ventral (7), les organes de guidage sont agencés en une paire d'organes écartés par un espacement faible l'un de l'autre, le long d'une direction au moins sensiblement verticale.

14. Installation selon l'une quelconque des revendications 1 à 13, **caractérisée par** un robot (8, 16) qui porte la tête de fente (5) qui elle-même porte le dispositif d'appui ventral (7) situé en dessous.

15. Installation selon l'une quelconque des revendications 1 à 13, **caractérisée par** un robot (8, 16) qui porte distinctement la tête de fente (5) et le dispositif d'appui ventral (7), situé en dessous de la tête de fente (5).

16. Installation selon l'une des revendications 14 ou 15, **caractérisée par** des moyens de déplacement relatifs à translation sur une faible course de la tête de fente (5) et du dispositif d'appui ventral (7) par rapport à une ligne au moins sensiblement horizontale située dans le plan de fente, et par des moyens de commande agissant également sur ces moyens de déplacement.

17. Installation selon l'une quelconque des revendications 1 à 16, **caractérisée par** des moyens de protection mobiles ou amovibles de l'outil de fente (4) aptes à ce que sa partie pouvant interférer avec les jambons de la carcasse C soit d'abord rendue inopérante au plus tard avant que l'outil de fente n'interfère avec la carcasse C et, ensuite, rendue opérante pour la fente de la carcasse C proprement dite.

18. Installation selon l'une quelconque des revendications 1 à 17, **caractérisée par** des moyens de commande des moyens moteurs de l'outil de fente (4), des moyens de déplacement de la tête de fente, des moyens de déplacement du dispositif d'appui dorsal (6), des moyens de déplacement du dispositif d'appui ventral (7), pour assurer soit la fente totale soit la fente partielle des carcasses C successives dans leurs plans médians respectifs.

19. Installation selon l'une quelconque des revendications 1 à 18, **caractérisée par** outil de fente (4) du type lame de scie circulaire montée à pivotement autour de son axe ou du type un ou un ensemble de couteaux montés à pivotement alternativement sur une certaine course.
